# EUROPÄISCHE PATENTSCHRIFT

(11) **EP 1 224 413 B1**
(45) Veröffentlichungstag und Bekanntmachung des Hinweises auf die Patenterteilung: **09.04.2003**
(21) Anmeldenummer: 00975904.4
(22) Anmeldetag: 24.10.2000
(51) Int. Cl.: F16H 63/20, F16H 63/36

(54) **EINSTANGEN-SCHALTEINRICHTUNG FÜR KRAFTFAHRZEUG-HANDSCHALTGETRIEBE**
SINGLE-ROD SHIFTING DEVICE FOR AN AUTOMOBILE MANUAL TRANSMISSION
DISPOSITIF DE CHANGEMENT DE VITESSES A UNE BARRE DESTINE A DES BOITES DE VITESSES DE VEHICULES

(30) Priorität: 27.10.1999 DE 19951683
(43) Veröffentlichungstag der Anmeldung: 24.07.2002
(73) Patentinhaber: ZF FRIEDRICHSHAFEN Aktiengesellschaft, 88038 Friedrichshafen (DE)
(72) Erfinder: PATZNER, Jens, 14480 Potsdam (DE); BEER, Uwe, 14476 Fahrland (DE)
(86) Internationale Anmeldenummer: EP0010459
(87) Internationale Veröffentlichungsnummer: WO01031233

(56) Entgegenhaltungen:
- EP-A- 0 530 466
- DE-A- 4 017 957
- DE-A- 4 335 754
- DE-A- 19 843 584
- PATENT ABSTRACTS OF JAPAN vol. 006, no. 096 (P-120), 4. Juni 1982 (1982-06-04) -& JP 57 029120 A (NISSAN DIESEL MOTOR CO LTD), 17. Februar 1982 (1982-02-17)

## Beschreibung

Die vorliegende Erfindung betrifft eine Einstangen-Schalteinrichtung für Kraftfahrzeug-Handschaltgetriebe, insbesondere für ein Sechs-Gang-Getriebe, mit einer zentralen Schaltwelle, mit gabelförmigen Schaltelementen in Form von Schaltschwingen oder Schubgabeln, die in Schiebemuffen eingreifen und mit einer Verriegelungseinrichtung, die beim Schalten eines der Schaltelemente aus der Neutralstellung in eine Schaltstellung die nicht zu schaltenden Schaltelemente in ihrer Neutralstellung verriegelt.

Eine Einstangen-Schalteinrichtung für Kraftfahrzeug-Handschaltgetriebe mit in Schiebemuffen eingreifenden gabelförmigen Schaltschwingen, welche über zumindest eine Schaltwelle um parallele Schwenklager aus ihrer Neutralstellung in Schaltstellungen verschwenkbar sind, wobei ortsfest im Getriebegehäuse angeordnete Verriegelungsmittel derart mit Verriegelungsnuten, die in an den Schaltschwingen befestigten Verriegelungsschwingen ausgebildet sind, zusammenwirken, dass bei Verschwenkung einer Schaltschwinge in eine Schaltstellung die übrigen Schaltschwingen in ihrer Neutralstellung verriegelt sind, ist aus der DE-A 40 17 957 der Anmelderin bekannt. Hierbei ist zwischen den Schaltschwingen jeweils ein parallel zum Schwenklager im Getriebegehäuse gelagerter zweiarmiger Kipphebel angeordnet, der über endseitige Sperrnocken in die Verriegelungsnuten eingreift.

Die Verriegelung der Schaltschwingen erfolgt hierbei also durch ein Kipphebel- und Koppelgliedersystem, welches erst beim Einschalten eines Ganges in der gewählten Gasse die nicht zu schaltenden Schaltschwingen verriegelt. Das Hebelsystem besteht dabei aus drei Gliedern, sofern drei Schaltschwingen vorgesehen sind. Bei Erhöhung der Anzahl der Gangstufen im Getriebe erhöht sich bei einer reinen Schwingenschaltung je nach Radsatzaufbau auch die Anzahl der Schaltschwingen. Pro zusätzlicher Schaltschwinge würden hierbei bei Beibehaltung des Verriegelungsprinzips zwei zusätzliche Glieder im Hebelsystem benötigt. Dadurch wird das System kompliziert, schlecht montierbar, toleranzanfällig, indirekt wirkend und damit unsicher.

Eine Gangschaltung für ein Kraftfahrzeuggetriebe mit einer Schaltwelle, durch deren Drehen die Getriebegänge nacheinander vorwählbar und durch deren Längsverschieben schaltbar sind, ist aus der EP B 530466 bekannt. Hierbei ist ein mit der Schaltwelle in ihrer Längsrichtung arretiertes Sperrelement vorgesehen, mit dem die nicht zu schaltenden Getriebegänge verriegelbar sind, wobei das Sperrelement eine parallel zur Schaltwelle gelagerte Sperrwelle ist und wobei zur Übertragung der Drehbewegung ein Mitnehmerstift der Schaltwelle in einer Kulissenführung der Sperrwelle längsgeführt ist. Die Schaltwelle weist Schalthülsen auf, auf denen Gabelhülsen drehbar gelagert sind, an denen die in Synchronisierkupplungen der Getriebegänge eingreifende Schaltgabeln angeordnet sind, wobei zum Schalten der Getriebegänge radial vorstehende Klauen der Schalthülsen an den Stirnseiten der Gabelhülsen anliegen und die Klauen in Ringaussparungen der nicht zu betätigenden Gabelhülsen eingreifen.

Aufgabe der vorliegenden Erfindung ist es, eine Einstangen-Schalteinrichtung für Kraftfahrzeug-Handschaltgetriebe, insbesondere für ein Sechs-Gang-Getriebe, zu schaffen, deren Verriegelungseinrichtung derart ausgestaltet ist, dass bereits bei Wählen der Schaltgasse, d. h. bevor in der gewählten Schaltgasse der zu schaltende Gang eingelegt ist, die nicht zu schaltenden Schaltelemente verriegelt sind, die einfach im Aufbau ist, aus wenigen Teilen besteht und damit gut montierbar ist und die in der Funktion unabhängig von der Anzahl der Schaltelemente aufgebaut ist und einen geringen Bauraum benötigt, die sicher verriegelt und trotzdem eine gute Diagonalschaltbarkeit ermöglicht, die geringe zu bewegende Massen und geringe Reibungsverluste aufweist, sodass die Wähl- und Schaltkräfte nur wenig beeinflußt werden und bei der das Einlegen eines weiteren Ganges in jedem Fall verhindert wird, wenn bereits ein Gang eingelegt ist und die preiswert in der Herstellung ist.

Ausgehend von einer Einstangen-Schalteinrichtung der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Erfindungsgemäß ist also vorgesehen, dass über eine Radial-Mitnahme die Wähl-Drehbewegung der axial verschieblich gelagerten zentralen Schaltwelle auf einen Hebel übertragen wird, dessen Drehpunkt auf der Drehachse der zentralen Schaltwelle liegt, dass durch einen Koppeltrieb die Drehbewegung des Hebels in eine lineare Bewegung eines Sperrteiles quer zur Schaltrichtung der zentralen Schaltwelle umgesetzt wird, wobei das Sperrteil in Schaltrichtung gehäusefest angeordnet ist, dass die Relativbewegung der zentralen Schaltwelle relativ zum Sperrteil beim Schalten eines Ganges durch den entsprechenden Freiheitsgrad in der Radialmitnahme selbst oder innerhalb des Koppeltriebs erfolgt und dass das Sperrteil und die Schaltschwingen bzw. Schubgabeln Sperrelemente aufweisen, die derart angeordnet sind, dass bei Überdeckung der Sperrelemente in der Schaltrichtung eine Bewegung der Schaltschwingen bzw. Schubgabeln zum Schalten der Getriebegänge verhindert wird.

Damit wird insbesondere der Vorteil erzielt, dass aufgrund der erfindungsgemäßen Ausgestaltung der Verriegelungseinrichtung diese bereits beim Wählen der Gasse aktiviert wird, d. h. dass die nicht zu schaltenden Schaltelemente bereits verriegelt werden, bevor in der gewählten Gasse der zu schaltende Gang eingelegt wird.

Im folgenden wird die Erfindung anhand der Zeichnung näher erläutert, in der vorteilhafte Ausführungsbeispiele dargestellt sind.
Es zeigen:
- Fig. 1: in perspektivischer Ansicht die wesentlichen Bauteile einer erfindungsgemäßen Einstangen-Schalteinrichtung,
- Fig. 2: eine Seitenansicht der Schalteinrichtung,
- Fig. 3: einen Schnitt entlang der Linie A-A in Fig. 2,
- Fig. 4: eine um 90° verdrehte Draufsicht auf die Schalteinrichtung gemäß Fig. 1,
- Fig. 5: einen Schnitt entlang der Linie A-A eines weiteren Ausführungsbeispiels,
- Fig. 6: diesen Schnitt eines anderen Ausführungsbeispiels,
- Fig. 7: eine perspektivische Ansicht eines weiteren Ausführungsbeispiels einer erfindungsgemäßen Einstangen-Schalteinrichtung und
- Fig. 8: eine perspektivische Ansicht eines anderen erfindungsgemäßen Ausführungsbeispiels.

Da derartige Schalteinrichtungen dem Fachmann gut bekannt sind, sind in den Figuren nur die für das Verständnis der Erfindung wesentlichen Bauteile dargestellt, wobei bei den einzelnen Darstellungen gleiche Teile mit gleichen Bezugszeichen versehen sind.

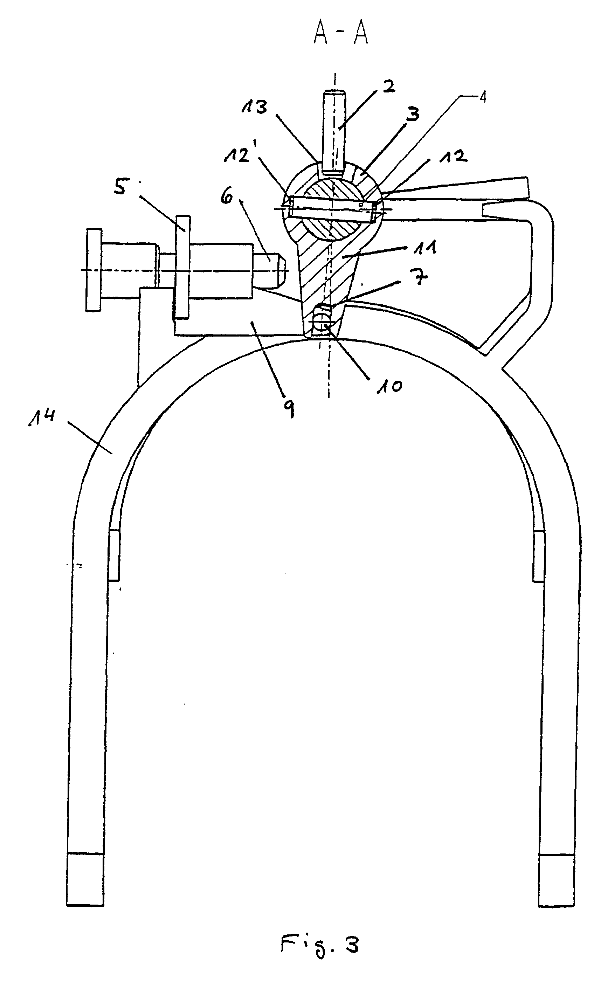

Die Einstangen-Schalteinrichtung für das Handschaltgetriebe weist eine zentrale Schaltwelle 1 auf, die drehbar und axial verschiebbar im (nicht dargestellten) Getriebegehäuse gelagert ist. Die Verriegelungseinrichtung weist ein Sperrblech 5 auf, zwei Führungsbolzen 6, eine Hebelnabe 3, einen Mitnehmerstift 4 (Fig. 3) und einen Arretierstift 2. Beim dargestellten Ausführungsbeispiel ist das Sperrblech mit vier Aussparungen 8, 8',..., mit zwei Führungshülsen und mit einem starren Schubglied 9 versehen, die jeweils senkrecht zum Sperrblech 5 angeordnet sind. Das Sperrblech selbst ist parallel zur zentralen Schaltwelle 1 angeordnet und auf den beiden Führungsbolzen 6, welche fest mit dem Gehäuse verbunden sind, verschiebbar gelagert.

Das starre Schubglied 9 besitzt an seinen einem Ende einen zum Sperrblech 5 parallelen Bolzen 10.

Koaxial und verschiebbar zur zentralen Schaltwelle 1 ist eine Hebelnabe 3 vorgesehen, die zusammen mit einem Verlängerungsteil 11 einen Hebel bildet; am unteren, freien Ende des Verlängerungsteils 11 ist ein Langloch 7 vorgesehen, in welches der Bolzen 10 des Sperrblechs 5 eingreift.

Die Hebelnabe 3 weist an ihrem Innendurchmesser ein oder zwei durchgängige Nuten 12, 12' auf (Fig. 3), in die der quer zur zentralen Schaltwelle 1 angeordnete Mitnehmerstift 4 eingreift. Am Außendurchmesser der Hebelnabe 3 befindet sich eine quer zur zentralen Schaltwelle 1 verlaufende bogenförmige Aussparung 13, in die der gehäusefest angeordnete Arretierstift 2 eingreift.

An den Schaltelementen 14, 14'... die als Schaltschwingen bzw. Schubgabeln ausgebildet sind, sind Sperrelemente 15, 15'... quer zum Sperrblech 5 angeordnet, welche in Querrichtung versetzt zueinander angeordnete Längsnuten 16, 16'... aufweisen.

Beim Wählen einer Gasse, d. h. durch Verdrehen der zentralen Schaltwelle 1 wird also über den Mitnehmerstift 4 die Hebelnabe 3 verdreht. Über das zwischen der Hebelnabe 3 und dem starren Schubglied 9 des Sperrbleches 5 angeordnete Schub-Dreh-Gelenk wird die Drehbewegung in eine Längsbewegung umgewandelt und das Sperrblech 5 auf seinen Führungsbolzen 6, 6' quer zur zentralen Schaltwelle 1 in Abhängigkeit von der Drehstellung der zentralen Schaltwelle bewegt.

Die Ausnehmungen 8, 8' im Sperrblech greifen über die Sperrelemente 15, 15' an den Schaltschwingen 14, 14'; in den Bereichen zwischen den einzelnen Schaltgassen überdekken sich die Sperrflächen an den Ausnehmungen mit den Sperrflächen der Sperrelemente an allen Schaltschwingen. Ist der Verdrehweg für das Erreichen einer Schaltgasse zurückgelegt, so fluchtet das Sperrblech mit der entsprechenden Längsnut des Sperrelementes der Schaltschwinge, welche den oder die Gänge in der vorgewählten Schaltgasse schaltet. Damit ist die Schaltschwinge bzw. die Schubgabel in Längsrichtung frei und kann geschaltet werden. Bei allen anderen Schaltschwingen bzw. Schubgabeln überdecken sich die Sperrflächen am Sperrblech mit den Sperrflächen an den Sperrelementen der Schwingen, da die Längsnuten in den Sperrelementen entsprechend dem Wähl-Drehweg versetzt zueinander angeordnet sind. Diese Schaltschwingen bzw. Schubgabeln sind somit arretiert.

Zum Schalten eines Ganges wird die zentrale Schaltwelle 1 relativ zum Gehäuse und damit zum Sperrblech 5 in Längsrichtung verschoben. Der Aufbau der Verriegelung erfordert eine in Längsrichtung feststehende Hebelnabe 3. Zu diesem Zweck ist die Hebelnabe 3 über den gehäusefesten Arretierstift 2 in Längsrichtung festgesetzt. Beim Verdrehen der zentralen Schaltwelle 1 hingegen wird die Hebelnabe 3 in ihrer äußeren bogenförmigen Nut 13 am Arretierstift 2 entlanggeführt. Beim Verschieben der zentralen Schaltwelle gleitet der Mitnehmerstift 4 in den Längsnuten 12, 12' am Innendurchmesser der Hebelnabe 3 entlang.

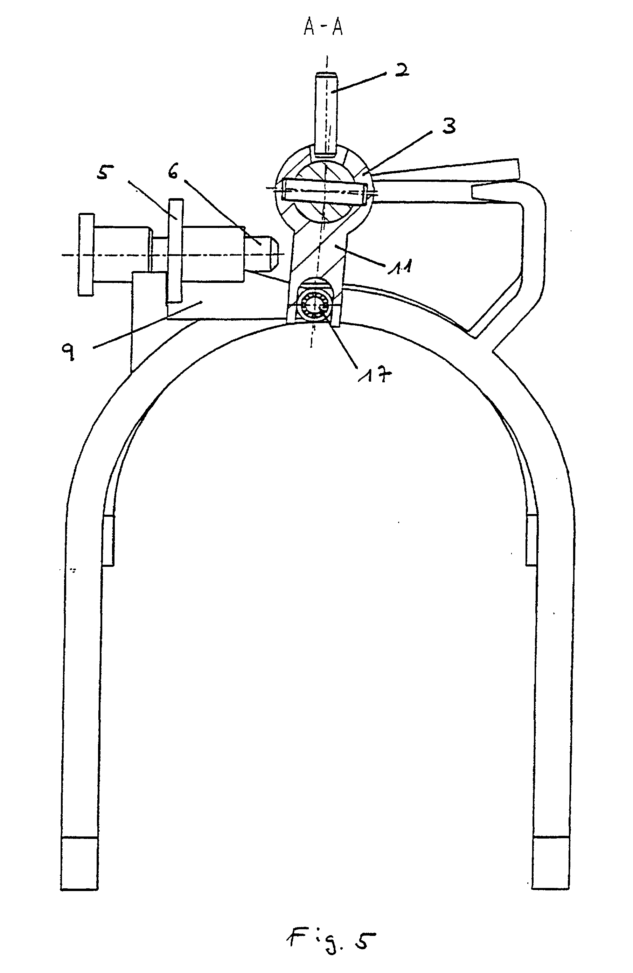

Bei dem in Fig. 5 dargestellten Ausführungsbeispiel ist das Schub-Dreh-Gelenk zwischen dem Hebel 3, 11 und dem starrem Schubglied 9 des Sperrbleches 5 anstelle des Bolzens 10 mit einer gleit- oder nadelgelagerten Rolle 17 versehen. Dadurch können die Reibungsverluste im Schub-Dreh-Gelenk verringert werden.

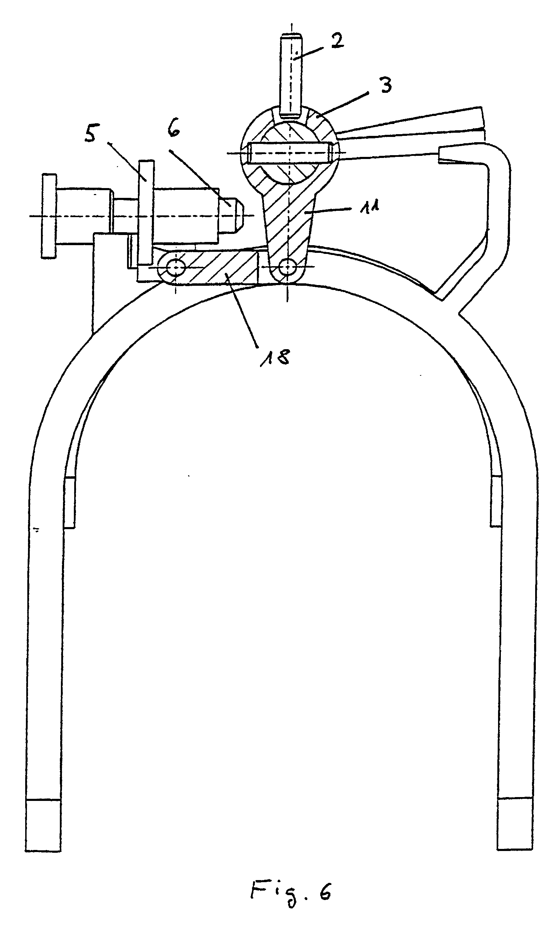

Bei dem in Fig. 6 dargestellten Ausführungsbeispiel ist das Schubglied nicht starr am Sperrblech 5 befestigt, sondern als Koppelglied 18 zwischen zwei Gelenken ausgeführt, wodurch eine Relativbewegung entlang des Langloches am Hebel 3, 11 entfällt und das Schub-Dreh-Gelenk selbst zum Drehgelenk wird. Hierbei wird eine weitere Verringerung der Reibungsverluste erzielt.

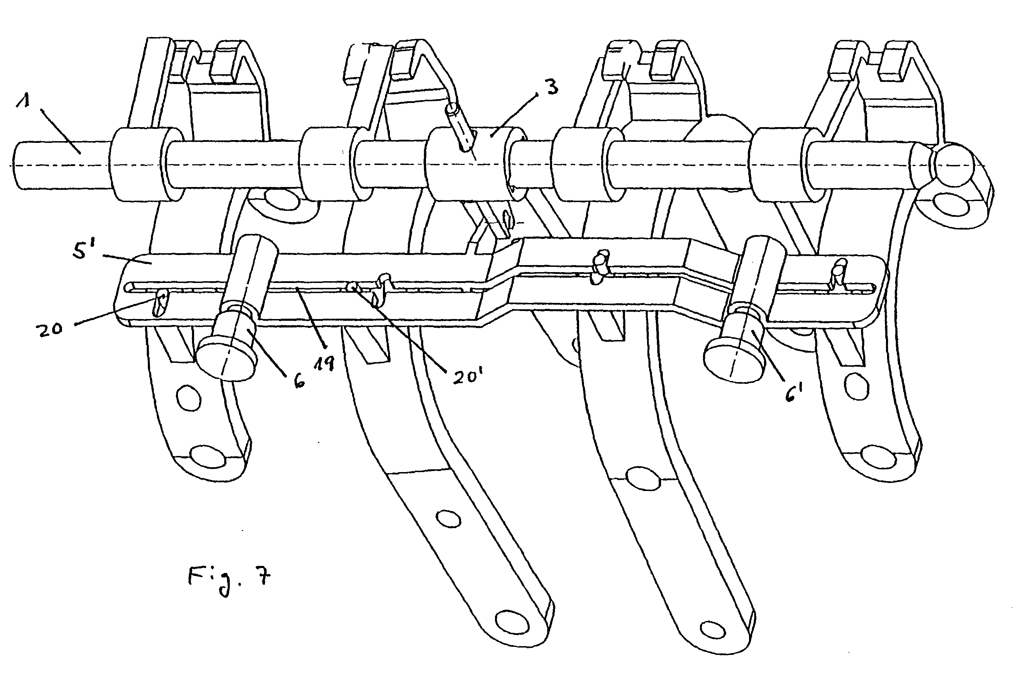

Bei dem in Fig. 7 dargestellten Ausführungsbeispiel ist das Sperrblech als liegendes Blech 5' mit ausgestanzter Sperr- und Freigangkontur 19 ausgestaltet, wobei die Sperrelemente auf den Schaltschwingen bzw. Schubgabeln als vertikale Stifte 20, 20'... ausgebildet sind, die in Längsrichtung fluchtend oder auch versetzt zueinander angeordnet sein können.

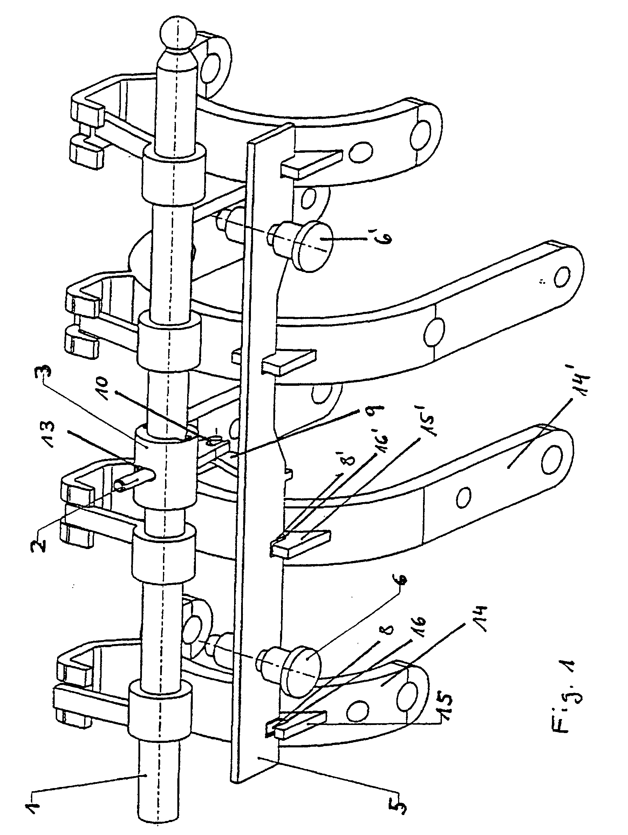

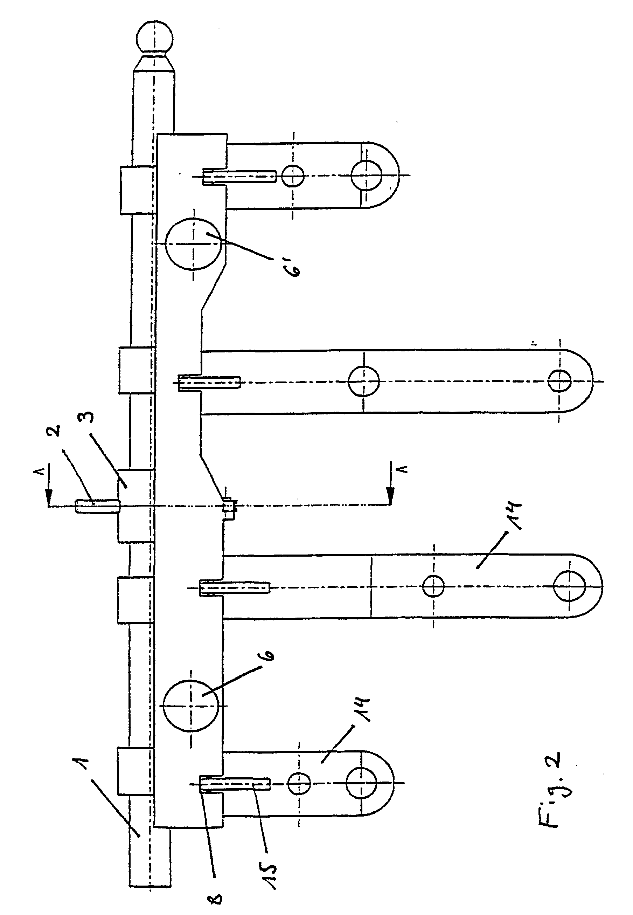

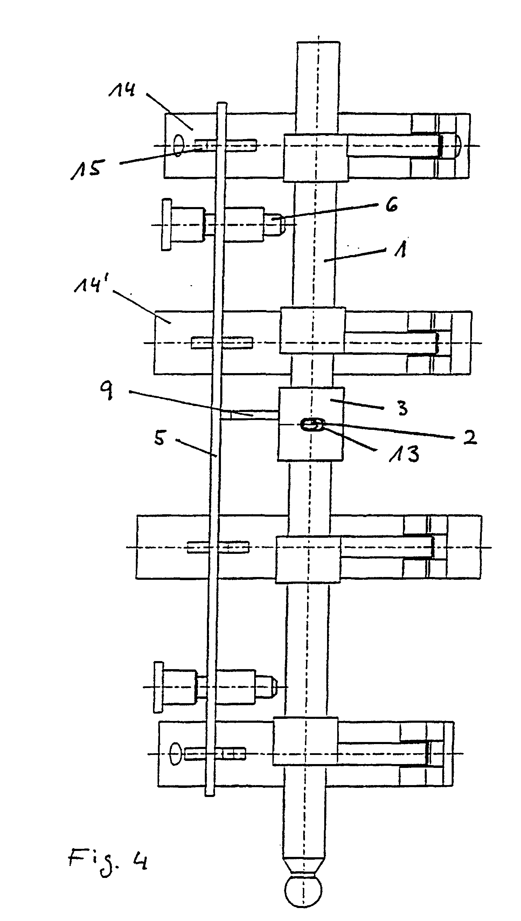

Auch eine Kombination der in Fig. 1 bis 4 dargestellten Grundvariante mit den in Fig. 5 und 7 dargestellten Varianten ist denkbar.

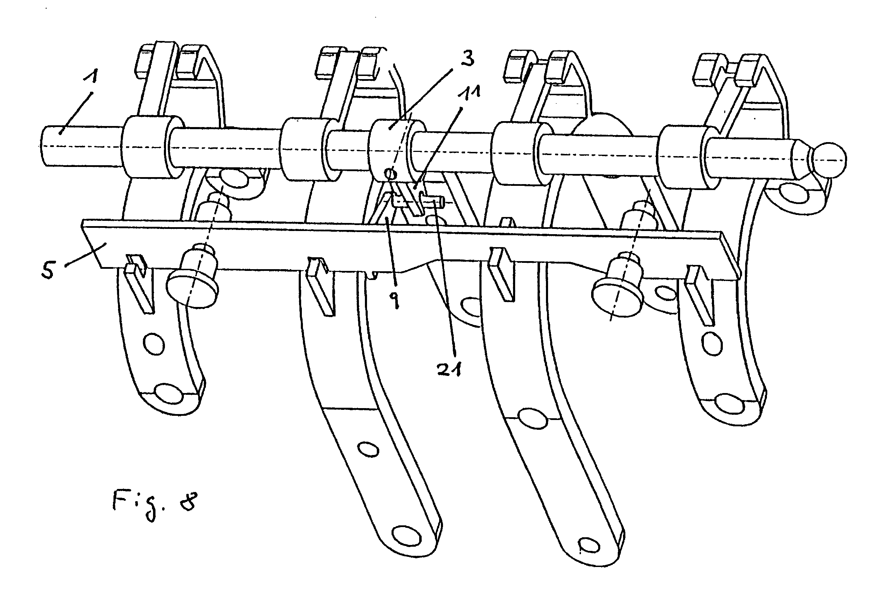

Fig. 8 zeigt ein Ausführungsbeispiel einer erfindungsgemäßen Einstangen-Schalteinrichtung, bei dem die Hebelnabe 3 auf der zentralen Schaltwelle 1 verstiftet ist. Eine axiale Relativbewegung der zentralen Schaltwelle 1 relativ zum Sperrblech 5 wird durch einen zusätzlichen Freiheitsgrad im Schub-Dreh-Gelenk ermöglicht. Die Nuten in der Hebelnabe 3 sowie der Arretierstift 2 gemäß Fig. 1 bis 4 entfallen hierbei. Der im Schub-Dreh-Gelenk vorgesehene Gelenkbolzen 21 entspricht dabei etwa dem doppelten Schaltweg.

Die erfindungsgemäße Schalteinrichtung erlaubt, ohne Funktionsbeeinträchtigung eine größere Anzahl von Schaltschwingen bzw. Schubgabeln sicherer zu verriegeln als dies nach dem Stand der Technik möglich war. Die Anzahl der benötigten Teile ist gering, der Aufbau der einzelnen Teile einfach und damit die Herstellungskosten günstig. Der benötigte Bauraum wird durch die parallele eng an die zentrale Schaltwelle angeschmiegte Lage begrenzt.

Die Paarungen der Sperrelemente bieten gute Voraussetzungen für eine leichte Diagonalschaltbarkeit und lassen sich perfekt auf den geforderten Wähl-/Schalt-komfort abstimmen.

### Bezugszeichen

- 1: zentrale Schaltwelle
- 2: Arretierstift
- 3: Hebelnabe
- 4: Mitnehmerstift
- 5: Sperrblech
- 6: Führungsbolzen
- 7: Langloch
- 8: Nuten
- 9: Schubglied
- 10: Bolzen
- 11: Verlängerung
- 12: Nuten
- 13: Aussparung
- 14: Schaltelement
- 15: Sperrelement
- 16: Längsnut
- 17: Lager
- 18: Koppelglied
- 19: Sperr- und Freigangkontur
- 20: Stift
- 21: Gelenkbolzen

## Patentansprüche

1. Einstangen-Schalteinrichtung für Kraftfahrzeug-Handschaltgetriebe, insbesondere für ein Sechs-Gang-Getriebe, mit einer zentralen Schaltwelle (1), mit gabelförmigen Schaltelementen (14, 14',...) in Form von Schaltschwingen oder Schubgabeln, die in Schiebemuffen eingreifen und mit einer Verriegelungseinrichtung, die beim Schalten eines der Schaltelemente aus der Neutralstellung in eine Schaltstellung die nicht zu schaltenden Schaltelemente in ihrer Neutralstellung verriegelt, **dadurch gekennzeichnet, dass** die Verriegelungseinrichtung einen Hebel (3, 11) aufweist, dessen Drehpunkt auf der Drehachse der axial verschiebbar gelagerten zentralen Schaltwelle (1) liegt und der über eine radiale Mitnahmeanordnung mit ihr verbunden ist, sowie ein Sperrteil (5) aufweist, das in Schaltrichtung gehäusefest angeordnet ist und einen Koppeltrieb aufweist, der die Drehung des Hebels (3, 11) in eine lineare Bewegung des Sperrteils (5) quer zur Schaltrichtung der zentralen Schaltwelle (1) umsetzt und Sperrelemente an den Schaltelementen (14, 14'...) und am Sperrteil (5) aufweist, die derart ausgestaltet sind, dass bei Überdeckung dieser Sperrelemente in Schalt-richtung eine Schaltbewegung der Schaltelemente (14, 14'...) verhindert wird.

2. Einstangen-Schalteinrichtung nach Anspruch 1, **dadurch gekennzeichnet, dass** der Hebel aus einer Hebelnabe (3) und einem Verlängerungsteil (11) besteht und dass die radiale Mitnahmeanordnung einen Stift (4) aufweist.

3. Einstangen-Schalteinrichtung nach einem der vorhergehenden Ansprüche, **dadurch gekennzeichnet, dass** das Sperrteil ein Sperrblech (5) ist, welches auf mehreren Führungsbolzen (6) in Querrichtung zur zentralen Schaltwelle (1) verschiebbar gelagert ist und das mit einer Vielzahl von Ausnehmungen (16, 16'...) versehen ist.

4. Einstangen-Schalteinrichtung nach einem der vorhergehenden Ansprüche, **dadurch gekennzeichnet, dass** die auf den Schaltelementen (14, 14'...) angeordneten Sperrelemente (15, 15'...) mit Längsnuten (8, 8'...) versehen sind, die mit den Ausnehmungen (16, 16') am Sperrblech (5) zusammenwirken.

5. Einstangen-Schalteinrichtung nach einem der vorhergehenden Ansprüche, **dadurch gekennzeichnet, dass** der Koppeltrieb zwischen Sperrblech (5) und zentraler Schaltwelle (1) ein starres Schubglied (9) ist, das an seinem dem Sperrblech abgewandten Enden einen zum Sperrblech (5) parallel verlaufenden Bolzen (10) aufweist.

6. Einstangen-Schalteinrichtung nach einem der vorhergehenden Ansprüche, **dadurch gekennzeichnet, dass** die Verlängerung (11) der Hebelnabe (3) an ihrem unteren Ende ein Langloch (7) aufweist, in welches der Bolzen (10) des starren Schubgliedes des Sperrblechs (5) eingreift.

7. Einstangen-Schalteinrichtung nach einem der vorhergehenden Ansprüche, **dadurch gekennzeichnet, dass** die Hebelnabe (3) am Innendurchmesser mindestens eine durchgängige Nut (12, 12') aufweist, in die ein quer zur zentralen Schaltwelle (1) angeordneter Mitnehmerstift (4) eingreift.

8. Einstangen-Schalteinrichtung nach einem der vorhergehenden Ansprüche, **dadurch gekennzeichnet, dass** der Koppeltrieb zwischen Sperrblech (5) und zentraler Schaltwelle (1) ein Schub-Dreh-Gelenk mit einer gleit- oder nadelgelagerten Rolle (17) aufweist.

9. Einstangen-Schalteinrichtung nach einem der vorhergehenden Ansprüche, **dadurch gekennzeichnet, dass** der Koppeltrieb zwischen Sperrblech (5) und zentraler Schaltwelle (1) als Drehgelenk (18) ausgeführt ist, das über zwei Gelenke mit dem Sperrblech bzw. der zentralen Schaltwelle verbunden ist.

10. Einstangen-Schalteinrichtung nach einem der vorhergehenden Ansprüche, **dadurch gekennzeichnet, dass** das Sperrblech (5') in im wesentlichen waagrechter Richtung angeordnet ist und mit einer ausgestanzten Sperr- und Freigangkontur (19) versehen ist, in die die auf den Schaltelementen (14, 14'...) befestigten Sperrelemente (20, 20'...) in Form von vertikalen Stiften in Längsrichtung fluchtend bzw. versetzt zueinander eingreifen.

11. Einstangen-Schalteinrichtung nach einem der vorhergehenden Ansprüche, **dadurch gekennzeichnet, dass** die Hebelnabe (3) auf der zentralen Schaltwelle (1) verstiftet ist und dass die axiale Relativbewegung der zentralen Schaltwelle (1) zum Sperrblech (5) durch einen zusätzlichen Freiheitsgrad in dem als Schub-Dreh-Gelenk ausgestalteten Koppeltrieb ermöglicht wird mittels eines im Schub-Dreh-Gelenk vorgesehenen Gelenkbolzens (21), dessen Länge im wesentlichen dem doppelten Schaltweg entspricht.

## Claims

1. Single-bar shifting apparatus for manual-gearshift motor vehicle gearboxes, in particular for a six-speed gearbox, the said apparatus having a central shifting shaft (1), having fork-shaped shifting elements (14, 14', ...) in the form of shifting rockers or thrust forks, which engage in sliding sleeves, and having a locking apparatus which, when one of the shifting elements is shifted out of the neutral position and into a shifting position, locks in their neutral position those shifting elements which are not to be shifted, **characterised in that** the locking apparatus has a lever (3, 11), the fulcrum of which lies on the axis of rotation of the central shifting shaft (1) mounted in an axially displaceable manner, and which lever is connected to the said central shaft via a radial entraining arrangement, and the said locking apparatus also has a blocking part (5) which is disposed in a manner integral with the casing in the direction of shifting and has a coupling drive which converts the rotation of the lever (3, 11) into a linear movement of the blocking part (5) transverse to the direction of shifting of the central shifting shaft (1) and has blocking elements on the shifting elements (14, 14', ...) and on the blocking part (5) which are configured in such a way that, when the said blocking elements are masked in the direction of shifting, a shifting movement of the said shifting elements (14, 14', ...) is prevented.

2. Single-bar shifting apparatus according to claim 1, **characterised in that** the lever consists of a lever hub (3) and an extension part (11), and that the radial entraining arrangement has a pin (4).

3. Single-bar shifting apparatus according to one of the preceding claims, **characterised in that** the blocking part is a metal blocking plate (5) which is mounted on a plurality of guide bolts (6) so as to be displaceable in a direction transverse to the central shifting shaft (1) and which is provided with a plurality of clearances (16, 16', ...).

4. Single-bar shifting apparatus according to one of the preceding claims, **characterised in that** the blocking elements (15, 15', ...) disposed on the shifting elements (14, 14', ...) are provided with longitudinal grooves (8, 8', ...) which interact with the clearances (16, 16') on the metal blocking plate (5).

5. Single-bar shifting apparatus according to one of the preceding claims, **characterised in that** the coupling drive between the metal blocking plate (5) and the central shifting shaft (1) is a rigid thrust member (9) which has, at its end that faces away from the metal blocking plate, a bolt (10) which extends parallel to the said metal blocking plate (5).

6. Single-bar shifting apparatus according to one of the preceding claims, **characterised in that** the extension (11) of the lever hub (3) has, at its lower end, a slot (7) in which the bolt (10) of the rigid thrust member of the metal blocking plate (5) engages.

7. Single-bar shifting apparatus according to one of the preceding claims, **characterised in that** the lever hub (3) has, on its internal diameter, at least one through-groove (12, 12') in which an entrainment pin (4) disposed transversely to the central shifting shaft (1) engages.

8. Single-bar shifting apparatus according to one of the preceding claims, **characterised in that** the coupling drive between the metal blocking plate (5) and the central shifting shaft (1) has a thrust/swivel joint with a roller (17) mounted on a sliding or needle bearing.

9. Single-bar shifting apparatus according to one of the preceding claims, **characterised in that** the coupling drive between the metal blocking plate (5) and the central shifting shaft (1) is designed as a swivel joint (18) which is connected to the metal blocking plate and to the central shifting shaft via two joints.

10. Single-bar shifting apparatus according to one of the preceding claims, **characterised in that** the metal blocking plate (5') is disposed in a substantially horizontal direction and is provided with a punched-out blocking and free-travel contour (19) in which the blocking elements (20, 20', ...) in the form of vertical pins, which are fastened on the shifting elements (14, 14', ...), engage so as to be aligned in the longitudinal direction or offset in relation to one another.

11. Single-bar shifting apparatus according to one of the preceding claims, **characterised in that** the lever hub (3) is pinned to the central shifting shaft (1), and that the axial relative movement of the said central shifting shaft (1) in relation to the metal blocking plate (5) is made possible by an additional degree of freedom in the coupling drive configured as a thrust/swivel joint, by means of a joint bolt (21) which is provided in the said thrust/swivel joint and the length of which substantially corresponds to twice the shifting path.

## Revendications

1. Dispositif de changement de vitesse mono-axe pour boîte de vitesses de véhicule automobile à commande manuelle, en particulier pour une boîte de vitesses à six vitesses, comprenant un axe de changement central (1) pourvu d'éléments de changement en forme de fourche (14, 14', ...) qui présentent la forme de bras de changement oscillants ou de fourchettes de poussée qui sont engagées dans des manchons à translation et un dispositif de verrouillage qui, lors du passage d'un des éléments de changement de la position de point mort à une position de changement, verrouille dans leur position de point mort les éléments de changement qui ne doivent pas intervenir pour le changement, **caractérisé en ce que** le dispositif de verrouillage comprend un levier (3, 11) dont le point de rotation se trouve sur l'axe de rotation de l'axe de changement central (1) monté mobile en translation axiale, et qui est assemblé à cet arbre au moyen d'un dispositif d'entraînement radial, et comprend un organe de blocage (5) qui est disposé fixe par rapport au carter dans la direction du changement et comporte un mécanisme d'accouplement qui transforme la rotation du levier (3, 11) en un mouvement linéaire de l'organe de blocage (5) transversalement à la direction de changement de l'axe de changement central (1), et comporte des éléments de blocage prévus sur les éléments de changement (14, 14', ...) et sur l'organe de blocage (5), et qui sont configurés de manière à empêcher un mouvement de changement des éléments de changement (14, 14'...) lorsque ces éléments de blocage se recouvrent dans la direction du changement.

2. Dispositif de changement de vitesse mono-axe selon la revendication 1, **caractérisé en ce que** le levier est composé d'un moyeu de levier (3) et d'une partie formant prolongement (11), et **en ce que** le dispositif d'entraînement radial comporte une goupille (4).

3. Dispositif de changement de vitesse mono-axe selon l'une des revendications précédentes, **caractérisé en ce que** l'organe de blocage est une plaque de blocage (5) qui est montée coulissante sur plusieurs tiges de guidage (6) dans une direction transversale à l'axe de changement central (1) et qui est pourvue d'une pluralité d'évidements (16, 16'...).

4. Dispositif de changement mono-axe selon l'une des revendications précédentes, **caractérisé en ce que** les éléments de blocage (15, 15'...) disposés sur les éléments de changement (14, 14'...) sont pourvus de rainures longitudinales (8, 8'...) qui coopèrent avec les évidements (16, 16') prévus sur la plaque de blocage (5).

5. Dispositif de changement de vitesse mono-axe selon l'une des revendications précédentes, **caractérisé en ce que** le mécanisme d'accouplement entre la plaque de blocage (5) et l'arbre de changement central (1) est un organe de poussée rigide (9) qui comporte, à son extrémité qui est éloignée de la plaque de blocage, un tourillon (10) s'étendant parallèlement à la plaque de blocage (5).

6. Dispositif de changement de vitesse mono-axe selon l'une des revendications précédentes, **caractérisé en ce que** le prolongement (11) du moyeu (3) du levier comporte à son extrémité inférieure un trou allongé (7) dans lequel le tourillon (10) de l'organe de poussée rigide de la plaque de blocage (5) est engagé.

7. Dispositif de changement de vitesse mono-axe selon l'une des revendications précédentes, **caractérisé en ce que** le moyeu (3) du levier comporte, au niveau de son diamètre intérieur, au moins une rainure ininterrompue (12, 12') dans laquelle est engagée une goupille d'entraînement (4) disposée transversalement à l'axe de changement central (1).

8. Dispositif de changement de vitesse mono-axe selon l'une des revendications précédentes, **caractérisé en ce que** le mécanisme d'accouplement entre la plaque de blocage (5) et l'axe de changement central (1) comporte une articulation de translation-rotation comprenant un galet (17) monté sur palier lisse ou sur aiguilles.

9. Dispositif de changement de vitesse mono-axe selon l'une des revendications précédentes, **caractérisé en ce que** le mécanisme d'accouplement entre la plaque de blocage (5) et l'axe de chargement central (1) est réalisé sous la forme d'une articulation de rotation (18) qui est reliée à la plaque de blocage et à l'axe de changement central par l'intermédiaire de deux articulations.

10. Dispositif de changement de vitesse mono-axe selon l'une des revendications précédentes, **caractérisé en ce que** la plaque de blocage (5') est disposée dans une direction sensiblement horizontale et est pourvue d'un profil de blocage et de libération découpé (19) dans lequel les éléments de blocage (20, 20'...) en forme de doigts verticaux fixés sur les éléments de changement (14, 14'...) s'engagent en alignement ou en décalage relatif dans la direction longitudinale.

11. Dispositif de changement de vitesse mono-axe selon l'une des revendications précédentes, **caractérisé en ce que** le moyeu (3) du levier est goupillé sur l'axe de changement central (1) et **en ce que** le mouvement axial relatif de l'axe de changement central (1) par rapport à la plaque de blocage (5) est rendu possible par un degré de liberté supplémentaire prévu dans le mécanisme d'accouplement réalisé sous la forme d'une articulation de translation-rotation, au moyen d'un tourillon d'articulation (21) prévu dans l'articulation de translation-rotation, et dont la longueur correspond sensiblement au double de la course de changement.
